# EUROPÄISCHE PATENTANMELDUNG

(11) **EP 0 620 243 A1**
(43) Veröffentlichungstag der Anmeldung: **19.10.1994**
(21) Anmeldenummer: 94104665.8
(22) Anmeldetag: 24.03.1994
(51) Int. Cl.: C08J 3/00, C08J 3/03, C09J 193/04, C08L 93/04

(54) **Verfahren zur Herstellung lösungsmittelfreier wässriger Dispersionen**

(30) Priorität: 15.04.1993 DE 4312303
(71) Anmelder: BASF Aktiengesellschaft, D-67063 Ludwigshafen (DE)
(72) Erfinder: Aydin, Oral, Dr., D-68165 Mannheim (DE); Kröner, Hubertus, Dr., D-67069 Ludwigshafen (DE); Wistuba, Eckehardt, Dr., D-67098 Bad Duerkheim (DE); Fickeisen, Peter, D-67246 Dirmstein (DE)

(57) **Zusammenfassung**

Verfahren zur Herstellung von wäßrigen Dispersionen, welche ein synthetisches, radikalisch polymerisiertes Polymerisat und ein Kolophoniumharz enthalten, dadurch gekennzeichnet, daß eine wäßrige Dispersion des synthetischen radikalisch polymerisierten Polymerisats mit einer wäßrigen Zubereitung eines Kolophoniumharzes, welches einen Gehalt an Carboxylgruppen von 0,1 bis 0,5 mol, bezogen auf 100 g Kolophoniumharz, aufweist, gemischt wird.

## Beschreibung

Die vorliegende Anmeldung betrifft ein Verfahren zur Herstellung von wäßrigen Dispersionen, welche zur Verwendung als Klebstoffe, insbesondere als Haft- und Fußbodenklebstoffe geeignet sind.

Zur Vermeidung von Lösungsmittelabfällen und -emissionen werden in zunehmendem Maß wäßrige Dispersionen als Klebstoffe eingesetzt. Geeignete wäßrige Dispersionen, wie sie z.B. in der EP-A-221 461 beschrieben sind, enthalten neben einem synthetischen, radikalisch polymerisierten Polymeren üblicherweise noch sogenannte klebrigmachende Harze (Tackifier).

Im allgemeinen handelt es sich bei diesen Harzen um Kolophoniumharze. Das klebrigmachende Harz wird nach der EP-A-221 461 in Form einer organischen Lösung zu der wäßrigen Dispersion des Polymeren gegeben, so daß in der erhaltenen Dispersion der Lösungsmittelgehalt üblicherweise noch über 3 Gew.-% liegt.

Nach dem Verfahren der EP-A-490 191 wird das klebrigmachende Harz in einem Weichmacher aufgelöst und dann der Dispersion zugesetzt. Auch der organische Weichmacher verbleibt dann in der wäßrigen Dispersion.

Nach anderen Verfahren wird das klebrigmachende Harz mit Hilfe eines Emulgators, Dispergierhilfsmittels oder Schutzkolloids in Wasser dispergiert. Die Gegenwart des hydrophilen Hilfsmittels wirkt sich nachteilig auf die anwendungstechnischen Eigenschaften aus.

Bisher bekannte wäßrige Dispersionen, welche als Klebstoff Verwendung finden, weisen im allgemeinen ein noch nicht befriedigendes Anzugsvermögen auf. Bei einem guten Anzugsvermögen hat die Verklebung schon kurz nach Zusammenfügen der zu verklebenden Teile eine ausreichende Festigkeit, so daß ein ungewolltes Verschieben der verklebten Teile im allgemeinen nicht auftritt.

Aufgabe der vorliegenden Erfindung war daher ein Verfahren zur Herstellung von wäßrigen Dispersionen, welche neben einem radikalisch polymerisierten Polymer ein Kolophoniumharz enthalten, bei dem im wesentlichen kein organisches Lösungsmittel oder Weichmacher verwendet wird. Weiterhin sollen die erhaltenen wäßrigen Dispersionen bei der Verwendung als Klebstoff ein gutes Anzugsvermögen aufweisen.

Demgemäß wurde ein Verfahren zur Herstellung von wäßrigen Dispersionen, welche ein synthetisches, radikalisch polymerisiertes Polymerisat und ein Kolophoniumharz enthalten, dadurch gekennzeichnet, daß eine wäßrige Dispersion des synthetischen radikalisch polymerisierten Polymerisats mit einer wäßrigen Zubereitung eines Kolophoniumharzes, welches einen Gehalt an Carboxylgruppen von 0,1 bis 0,5 mol, bezogen auf 100 g Kolophoniumharz, aufweist, gemischt wird, gefunden. Gefunden wurden auch nach diesem Verfahren hergestellte wäßrige Dispersionen sowie die Verwendung der wäßrigen Dispersionen als Klebstoffe, insbesondere als Haft- und Fußbodenklebstoffe.

Das synthetische, radikalisch polymerisierte Polymerisat besteht vorzugsweise zu mindestens 40 Gew.-%, besonders bevorzugt zu mindestens 60 Gew.-%, aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden und nichtaromatischen Kohlenwasserstoffen mit mindestens 2 konjugierten Doppelbindungen und 4 bis 8 C-Atomen, oder deren Gemische, welche im weiteren als Hauptmonomere bezeichnet werden.

Als Hauptmonomere zu nennen sind z.B. insbesondere (Meth)-acrylsäurealkylester mit einem C₁-C₁₀-Alkylrest, wie Methylmethacrylat, Methylacrylat, n-Butylacrylat, Ethylacrylat und 2-Ethylhexylacrylat.

Vinylester von Carbonsäuren mit 1 bis 20 C-Atomen sind z.B. Vinyllaurat, -stearat, Vinylpropionat und besonders bevorzugt Vinylacetat.

Als vinylaromatische Verbindungen kommen Vinyltoluol, α- und p-Styrol, α-Butylstyrol, 4-n-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei olefinischen Doppelbindungen seien Butadien, Isopren und Chloropren genannt. Bevorzugt ist Butadien.

Besonders bevorzugt sind Polymerisate, welche zu mindestens 40 Gew.-%, insbesondere zu mindestens 60 Gew.-% aus
i) C₁- bis C₂₀-Alkyl(meth)acrylaten oder deren Gemische mit Vinylaromaten, oder
ii) 2 bis 8 C-Atome enthaltenden Diolefinen, insbesondere Butadien oder deren Gemische mit Vinylaromaten, oder
iii) Vinylestern von Carbonsäuren mit 1 bis 20 C-Atomen,
bestehen.

Ganz besonders bevorzugt sind Polymerisate mit unter i) genannten Hauptmonomeren.

Weitere Monomere, welche im Copolymerisat enthalten sein können, sind z.B. Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl(meth)acrylat, Phenylpropyl(meth)acrylat- oder Acrylsäureester von heterocyclischen Alkoholen wie Furfuryl(meth)acrylat genannt.

Darüber hinaus kommen weitere Monomere wie (Meth)acrylamid, sowie deren am Stickstoff mit C₁-C₄-Alkyl substituierten Derivate und Glycidyl(meth)acrylat in Betracht.

Von Bedeutung sind auch hydroxyfunktionelle Monomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind C₁-C₈-Hydroxyalkyl(meth)acrylate, wie n-Hydroxyethyl-, n-Hydroxypropyl- oder n-Hydroxybutyl(meth)acrylat.

Vorzugsweise sind auch Monomere mit salzbildenden Gruppen, insbesondere Säuregruppen im Polymer enthalten. Geeignet sind z.B. Acrylsäure, Methacrylsäure, Itaconsäure, Fumarsäure, Maleinsäure oder deren Halbester.

Der Gewichtsanteil der Monomeren mit salzbildenden Gruppen liegt im allgemeinen zwischen 0 bis 10 Gew.-%, insbesondere bei 0,1 bis 5 Gew.-%, bezogen auf das Polymerisat.

Der Gewichtsanteil der oben genannten weiteren Monomeren ist ausgehend von dem Gewichtsanteil der Hauptmonomeren und gegebenenfalls der Monomeren mit salzbildenden Gruppen so zu wählen, daß sich die Gewichtsprozente auf 100 ergänzen.

Die Monomeren werden vorzugsweise so gewählt, daß die Glasübergangstemperatur des Polymerisats zwischen -80°C und +120°C, vorzugsweise zwischen -60°C und +100°C liegt.

Bei der Verwendung als Klebstoff liegt die Glasübergangstemperatur vorzugsweise zwischen -60°C und +20°C.

Die Glasübergangstemperatur des Polymerisats läßt sich nach üblichen Methoden wie Differentialthermoanalyse oder Differential Scanning Calorimetrie (s. ASTM 3418/82, sog. "midpoint temperature") bestimmen.

Die Herstellung des Polymerisats erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere von Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Bevorzugt sind wäßrige Dispersionen von synthetischen, radikalisch polymerisierten Polymerisaten mit einem hohen Feststoffgehalt, insbesondere über 50, vorzugsweise über 60 Gew.-%. Die Herstellung solcher Dispersionen ist z.B. in den deutschen Patentanmeldungen P4213965.1 (O.Z. 43182), P4213964.3 (O.Z. 43183), P4213967.8 (O.Z. 43184), P4213968.6 (O.Z. 43185) und P4213969.4 (O.Z. 43186) beschrieben.

Bei dem erfindungsgemäßen Verfahren wird die wäßrige Dispersion eines synthetischen, radikalisch polymerisierten Polymerisats mit einer wäßrigen Zubereitung eines Kolophoniumharzes gemischt.

Kolophoniumharze sind natürliche Harze, die je nach Herkunft auch z.B. als Balsamharz, Wurzelharz oder Tallharz bezeichnet werden. Sie bestehen im wesentlichen aus Harzsäuren wie Abietin-, Neoabietin-, hydrierter und dehydrierter Abietinsäure, Palustrinsäure, Pimarin- und Isopimarinsäure. In den Kolophoniumharzen können die Harzsäuren im allgemeinen in chemisch modifizierter Form vorliegen, insbesondere können die Harzsäuren polymerisiert und die Säuregruppen zu einem großen Teil, insbesondere mit ein- bis vierwertigen C₁-bis C₂₀-Alkylalkoholen, verestert sein.

Die erfindungsgemäß verwendeten Kolophoniumharze haben vorzugsweise ein Molekulargewicht von 250 bis 5.000 und besonders bevorzugt ein Molekulargewicht von 300 bis 1.000.

Weiterhin haben die Kolophoniumharze einen Gehalt an (nicht veresterten) Carbonsäuregruppen von 0,1 bis 0,5, vorzugsweise von 0,15 bis 0,4 mol, besonders bevorzugt von 0,2 bis 0,35 mol, bezogen auf 100 g Kolophoniumharz (Feststoff).

Bei dem erfindinngsgemäßen Verfahren wird zunächst eine wäßrige Zubereitung des Kolophoniumharzes hergestellt. Das Kolophoniumharz kann dazu im Wasser im allgemeinen durch Rühren suspendiert werden. Der Feststoffgehalt der wäßrigen Zubereitung wird im allgemeinen auf 20 bis 80 Gew.-% eingestellt.

Zur besseren Supendierung wird das Kolophoniumharz vorzugsweise auf eine Temperatur oberhalb seines Schmelzpunktes, im allgemeinen auf eine Temperatur zwischen 50 und 95°C, vorzugsweise zwischen 70 und 90°C, erhitzt. Die erhaltene wäßrige Zubereitung wird dann vorzugsweise bis zum Vermischen mit der wäßrigen Dispersion auf dieser Temperatur gehalten.

Die wäßrige Zubereitung kann auch noch weitere Zusatzstoffe enthalten. Vorzugsweise enthält die wäßrige Zubereitung keine Emulgatoren, Dispergierhilfsmittel oder Schutzkolloide oder sonstige Hilfsstoffe, die eine Dispergierung oder Emulgierung des Kolophoniumharzes bewirken können.

Die wäßrige Zubereitung enthält vorzugsweise keine organischen Lösungsmittel oder Weichmacher. Lösungsmittel oder Weichmacher bewirken, daß das Kolophoniumharz ganz oder teilweise in organischer Phase gelöst wird.

Vor oder während des Vermischens mit der wäßrigen Dispersion wird vorzugsweise zumindest ein Teil der Säuregruppen des Kolophoniumharzes in Salzgruppen überführt. Dazu kann z.B. eine Base, insbesondere Ammoniak, als Neutralisationsmittel zugesetzt werden.

Beim Mischvorgang kann die wäßrige Zubreitung des Kolophoniumharzes bei einer Temperatur von 30 bis 95°C, bevorzugt bei 50 bis 90°C, vorgelegt werden. In diese Zubereitung wird die Dispersion des synthetischen, radikalisch polymerisierten Polymerisats vorzugsweise unter Rühren eingetragen. Die Dispersion kann dabei eine Temperatur von 10 bis 95°C aufweisen, vorzugsweise 30 bis 80°C. Üblicherweise geschieht dieses Eintragen bei laborüblichen Mengen im kg-Bereich portionsweise oder kontinuierlich, bei größeren Mengen, wie sie in der Produktion üblich sind, bevorzugt kontinuierlich. Beim kontinuierlichen Eintrag wird die Dispersion innerhalb von 5 min bis 3 Stunden mit konstanter oder variabler Dosiergeschwindigkeit zu der Zubereitung zudosiert. Die Temperatur der Zubereitung kann dabei während des Dosiervorganges konstant sein oder sich auch ändern. Nach Beendigung des Dosiervorganges kann man noch zwischen 0 und 3 h rühren.

Wahlweise kann auch die Zubereitung nach dem oben beschriebenen Verfahren in die Dispersion gegeben werden, bevorzugt ist jedoch der Eintrag der Dispersion in die wäßrige Zubereitung des Kolophoniumharzes.

Nach dem Vermischen der wäßrigen Zubereitung des Kolophoniumharzes mit der wäßrigen Dispersion des Polymerisats wird eine wäßrige Dispersion erhalten, deren Feststoffgehalt vorzugsweise 30 bis 80 Gew.-%, besonders bevorzugt 60 bis 80 Gew.-%, bezogen auf die Dispersion, beträgt. Der pH-Wert der erhaltenen wäßrigen Dispersion liegt vorzugsweise zwischen 6 und 8.

Die wäßrige Dispersion ist im wesentlichen frei von organischen Lösungsmitteln oder Weichmachern. Sie zeichnet sich durch ein verbessertes Anzugsvermögen aus und eignet sich daher insbesondere als Haftklebstoff oder Fußbodenklebstoff zum Verkleben von Fußbodenbelägen.

Die wäßrige Dispersion kann für die verschiedenen Verwendungen übliche Zusatzstoffe, wie Füllstoffe, Verdickungsmittel, Verlaufsmittel etc. enthalten. Diese Zusatzstoffe können nach dem Mischvorgang der fertigen wäßrigen Dispersion oder bereits vorher den Ausgangskomponenten beigemischt werden.

### Beispiele

Als Mischungskomponente wurden die Copolymerdispersionen gemäß Tabelle 1 verwendet.

**Tabelle 1**

| Dispersion | Monomerzusammensetzung in Gew.-% | Feststoffgehalt in Gew.-% |
|---|---|---|
| D1 | 98 % n-Butylacrylat | 70,9 |
| | 2 % Methacrylsäure | |
| D2 | 88 % n-Butylacrylat | 71,4 |
| | 10 % Methacrylat | |
| | 2 % Acrylsäure | |
| D3 | 78 % n-Butylacrylat | 69,9 |
| | 14 % Ethylhexylacrylat | |
| | 5 % Vinylacetat | |
| | 2,5 % Methacrylsäure | |
| | 0,5 % Hydroxyethylacrylat | |
| D4 | 78 % n-Butylacrylat | 71,3 |
| | 14 % Ethylhexylacrylat | |
| | 5 % Vinylacetat | |
| | 2,5 % Methacrylsäure | |
| | 0,5 % Hydroxyethylacrylat | |

Zur Herstellung der wäßrigen Zubereitung der Kolophoniumharze wurde die in der Tabelle 2 angegebene Harzmenge zusammen mit der in Tabelle 2 angegebenen Menge Wasser und 25 %igem Ammoniakwasser in ein gerührtes Gefäß gegeben, auf 85°C geheizt und bei dieser Temperatur 15 min gerührt.

Zu den wäßrigen Zubereitungen wurde anschließend die in Tabelle 2 angegebene Menge an Dispersion innerhalb von 60 min so zugegeben, daß die Temperatur der Zubereitung 80°C nicht unterschritt. Anschließend wurde die Abmischung noch 15 min bei 80°C gerührt und anschließend unter Rühren abgekühlt.

**Tabelle 2**

| Abmischungen | | | | | | |
|---|---|---|---|---|---|---|
| Abmisch. Nr. | Kolophoniumharz g | Wasser g | NH3-Wasser g | Dispersion g | FG % | pH-Wert |
| A1 | Floral®AXE 100 g | 250 | 10 | D1 1056 g | 60,5 | 8,6 |
| A2 | Balsamharz 250 g | 300 | 15 | D2 1056 g | 60,9 | 7,8 |
| A3 | Balsamharz 300 g | 300 | 15 | D3 1000 g | 62,3 | 7,7 |
| A4 | Balsamharz 250 g | 280 | 12,5 | D3 1071 g | 61,8 | 7,7 |
| A5 | Balsamharz 100 g | 220 | 10 | D3 1286 g | 61,6 | 8,2 |
| A6 | Balsamharz 300 g | 300 | 15 | D4 1000 g | 62,3 | 7,7 |
| A7 | Balsamharz 250 g | 280 | 12,5 | D4 1071 g | 62,0 | 7,8 |
| A8 | Balsamharz 100 g | 220 | 10 | D4 1268 g | 61,0 | 8,3 |
| Floral® AXE: Kolophoniumharz der Fa. Hercules GmbH (Gehalt an Carbonsäuregruppen 0,30 Mol/100 g Balsamharz : portugiesisches Balsamharz WW, geschuppt der Fa. Willers & Engels, Hamburg (Gehalt an Carbonsäuregruppen 0,27 Mol/100 g) | | | | | | |

### Anwendungstechnische Prüfungen

Die Dispersionen bzw. Abmischungen wurden für die Prüfung mit Kreide im Verhältnis 1:1 (fest/fest) abgemischt und dann als Fußbodenklebstoffe geprüft.
- Naßanzugsvermögen
Der Klebstoff wird mit einem DIN-Rakel auf eine Zementfaserplatte (Eternit® 2000) (20 x 50 cm) in Abzugsrichtung aufgetragen, Auftragsmenge ca. 350 bis 400 g/m². Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen und dabei die Zunahme des Abschälwiderstandes in n/5 cm bestimmt.

**Tabelle 3**

| Naßanzugsvermögen, Werte in (N/5 cm) | | | |
|---|---|---|---|
| Beispiel | nach 10 min | nach 20 min | nach 30 min |
| D3 | 8 K | 20 K | 26 K |
| A3 | 18 K/AE | 30 AE | 24 AE |
| A4 | 20 K/AE | 25 AE | 25 AE |
| A5 | 12 K | 30 K | 36 K |
| D4 | 6 K | 15 K | 22 K/AE |
| A6 | 8 K | 18 AE | 20 AE |
| A7 | 10 K | 25 K | 30 AE |
| A8 | 7 K | 28 K | 35 K/AE |
| K=Kohäsionsbruch, AE=Adhäsionsbruch auf Estrichseite | | | |

- Trockenanzugsvermögen
Der Klebstoff wird mit einem DIN-Rakel auf eine Zementfaserplatte (Eternit® 2000) (20 x 50 cm) in Abzugsrichtung aufgetragen, Auftragsmenge ca. 250 bis 300 g/m² . PVC-Streifen (Pegulan® Bl) werden nach unterschiedlicher Ablüftzeit in das Kleberbett eingelegt und mit einer 2,5 kg Walze durch 3 mal Hin- und Herrollen angepreßt. Anschließend werden die Streifen mit einem Abzugsgerät abgezogen und der Abschälwiderstand in N/5 cm bestimmt.

**Tabelle 4**

| Trockenanzugsvermögen, Werte in (N/5 cm) | | | |
|---|---|---|---|
| Beispiel | nach 10 min | nach 20 min | nach 30 min |
| D1 | 3 K | 12 K | 30 K |
| A1 | 2 K | 25 K | 37 K |
| D2 | 2 K | 20 K | 38 K |
| A2 | 2 K | 15 K | 30 K |
| D3 | 8 K | 6 A/PVC | 6 A/PVC |
| A3 | 2 K/AE | 10 AE | 20 A/PVC |
| A4 | 0 K | 14 K/AE | 25 A/PVC |
| A5 | 4 K | 14 A/PVC | 8 A/PVC |
| D4 | 8 K | 6 A/PVC | 6 A/PVC |
| A6 | 2 K | 23 K/AE | 28 A/PVC |
| A7 | 0 K | 20 K/AE | 25 A/PVC |
| A8 | 0 K | 20 K | 15 A/PVC |
| K=Kohäsionsbruch, AE=Adhäsionsbruch auf der Estrichseite, A/PVC=Adhäsionsbruch auf der PVC-Seite | | | |

## Patentansprüche

1. Verfahren zur Herstellung von wäßrigen Dispersionen, welche ein synthetisches, radikalisch polymerisiertes Polymerisat und ein Kolophoniumharz enthalten, dadurch gekennzeichnet, daß eine wäßrige Dispersion des synthetischen radikalisch polymerisierten Polymerisats mit einer wäßrigen Zubereitung eines Kolophoniumharzes, welches einen Gehalt an Carboxylgruppen von 0,1 bis 0,5 mol, bezogen auf 100 g Kolophoniumharz, aufweist, gemischt wird.

2. Verfahren nach Anspruch 1, dadurch gekennzeichnet, daß vor oder während des Mischvorganges ein Neutralisationsmittel zugesetzt wird, so daß zumindest ein Teil der Carboxylgruppen des Kolophoniumharzes als Carboxylatgruppen vorliegen.

3. Verfahren nach Anspruch 1 oder 2, dadurch gekennzeichnet, daß die Temperatur der wäßrigen Zubereitung des Kolophoniumharzes oberhalb der Schmelztemperatur des Kolophoniumharzes liegt.

4. Verfahren nach einem der Ansprüche 1 bis 3, dadurch gekennzeichnet, daß der Feststoffgehalt der erhaltenen wäßrigen Dispersion größer 60 Gew.-% ist.

5. Verfahren nach einem der Ansprüche 1 bis 4, dadurch gekennzeichnet, daß das synthetische, radikalisch polymerisierte Polymerisat zu mindestens 60 Gew.-% aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen mit 3 bis 6 C-Atomen, Vinylhalogeniden und nichtaromatischen Kohlenwasserstoffen mit mindestens 2 konjugierten Doppelbindungen und 4 bis 8 C-Atomen, oder deren Gemische, besteht.

6. Verfahren nach einem der Ansprüche 1 bis 5, dadurch gekennzeichnet, daß das synthetische, radikalisch polymerisierte Polymerisat einen Gehalt von 0,1 bis 5 Gew.-% an Monomeren mit einer salzbildenden Gruppe aufweist.

7. Wäßrige Dispersionen, erhältlich nach einem der Ansprüche 1 bis 6.

8. Verwendung von wäßrigen Dispersionen gemäß einem der Ansprüche 1 bis 7 als Klebstoff.

9. Verwendung von wäßrigen Dispersionen gemäß einem der Ansprüche 1 bis 7 als Haftkleber oder Fußbodenkleber.
